# EUROPEAN PATENT SPECIFICATION

(11) **EP 3 611 102 B1**
(45) Date of publication and mention of the grant of the patent: **07.04.2021**
(21) Application number: 19178992.4
(22) Date of filing: 07.06.2019
(51) Int. Cl.: B65B 47/10, B65B 3/02, B65B 9/04, B65B 65/00, F16L 27/093, B65G 21/20

(54) **A PIN AND BUSH PIVOT COUPLING AND A MODULAR CONVEYOR COMPRISING MODULES WITH WORKING CAVITIES CONNECTED BY MEANS OF SUCH PIVOT COUPLINGS**
STIFT- UND BUCHSENSCHWENKKUPPLUNG UND MODULARER FÖRDERER MIT MODULEN MIT ARBEITSKAVITÄTEN, DIE ÜBER DERARTIGE SCHWENKKUPPLUNGEN VERBUNDEN SIND
COUPLAGE DE PIVOT DE BROCHE ET DE BARRE ET CONVOYEUR MODULAIRE COMPRENANT DES MODULES AYANT DES CAVITÉS FONCTIONNELLES CONNECTÉES AU MOYEN DE TELS COUPLAGES DE PIVOT

(30) Priority: 24.07.2018 PL 42643518
(43) Date of publication of application: 19.02.2020
(73) Proprietor: Gasiorowski, Marek, 05-503 Glosków (PL)
(72) Inventor: Gasiorowski, Marek, 05-503 Glosków (PL)
(74) Representative: Karcz, Katarzyna

(56) References cited:
- DE-A1-102007 023 448
- US-A- 2 481 404
- US-A- 3 129 545
- US-A- 3 195 288
- US-A- 3 290 858

## Description

The invention concerns a pin and bush pivot coupling and a modular conveyor comprising modules with working cavities connected by means of such pivot couplings. The modular conveyor of this type enables to convey a pneumatic medium, in particular vacuum and/or compressed air to the working cavities.

A conveyor of this type may be used for performing various technological operations of manufacturing or processing products located in the working cavities. For example, it may be used in the manufacture of dishwasher or laundry capsules containing cleaning products packaged in a water-soluble film. It may also be used in the manufacture of capsules containing other products, e.g. food products.

Vacuum is used in order to maintain products within individual modules and to form the products, e.g. thermoform the products upon heating the film. Compressed air may be used as a driving means of the clamps holding the products on the individual modules. Compressed air may also be used for pressing the products in order to assist the thermoforming process and for removing the products from the conveyor modules.

The current invention may be applied in various types of machines containing modular conveyors. Machines with modular conveyors operating continuously are known; in such machines the conveyor operates without stopping and all the process operations in the individual conveyor modules are performed on the fly. Such machines and the associated modular conveyors are known as continuous motion machines and conveyors.

In other types of machines the modular conveyor operates intermittently. It stops in preset positions so that the modules in which a process operation is being performed are located precisely under the working stations performing the respective process operations during the stoppage. Then the conveyor moves on and stops again after passing a distance equal to the length of one module or its multiple. Then the cycle of the process operations is repeated. Usually, each module stops several times under different working stations performing various operations necessary to complete a full production cycle. Such machines and the associated modular conveyors are known as intermittent machines and conveyors.

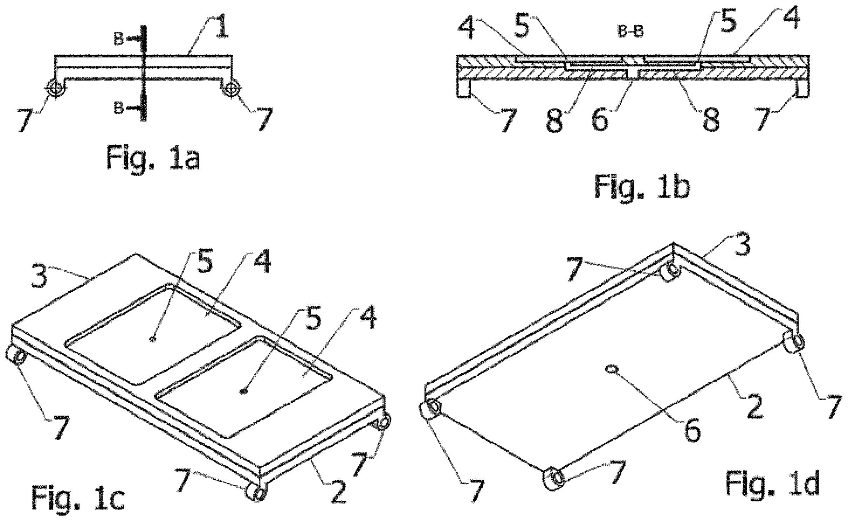

Figures 1a to 3b show an exemplary conveyor of the above described type known in the state of art. Figs. 1a-1d show a module of the known conveyor, respectively in a cross-section, a longitudinal side view and axonometric view from above and from below. The module 1 with the channels supplying vacuum or compressed air consists of two parts - a lower plate 2 and an upper plate 3. The upper plate comprises working cavities 4. The upper plate shown in the drawing 1c has two working cavities 4, each having one opening 5 for supplying vacuum or compressed air.

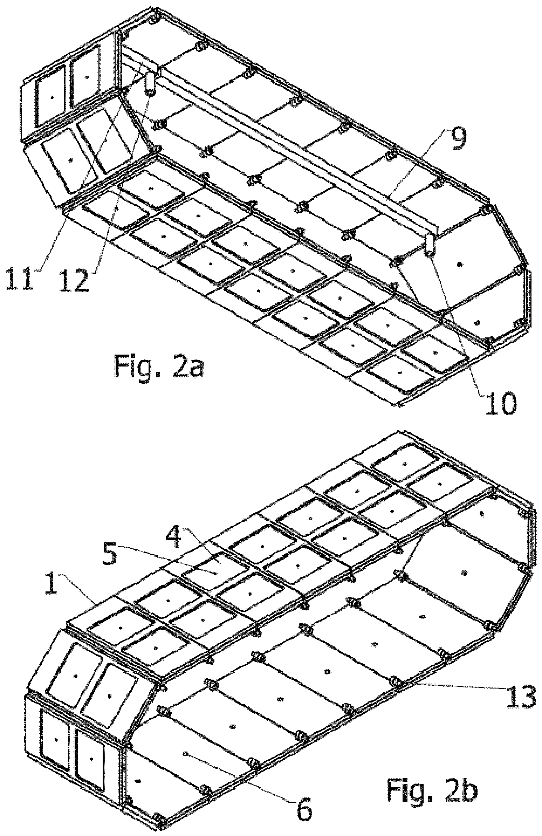

In the known and commonly used conveyors the upper plates 3 are also provided with more cavities 4, each possibly having more than one opening 5 for supplying vacuum or compressed air. The lower plate 2 has a manifold 8 for supplying vacuum or compressed air to the openings 5 of the upper plate 3. The vacuum or compressed air are delivered to the manifold 8 via an opening 6 located at the bottom of the lower plate 2. In the modular conveyors the described modules 1 are connected so as to form and endless chain shown in figs. 2a - 2b.

Most often, the conveyor is formed by mounting the modules on a typical driving chain, but it may also be formed by forming such an endless chain by connecting the individual modules by means of pins 13 as illustrated in fig. 2a (an axonometric view from below) and in fig. 2b (an axonometric view from above). In order to enable such connection the lower plates are provided with the bushes 7 shown in figs. 1a - 1d. As may be seen, the conveyor is formed of twenty modules 1 connected by the pins 13.

Openings 6 in the lower part of the conveyor, shown in figs. 1d and 2b, are designed for supplying vacuum or compressed air to the modules 1. In the upper part of the conveyor two manifolds are adjoined to the bottom of the modules 1, the manifolds covering the openings 6. The manifold 9, which is supplied with vacuum through a stub pipe 10, delivers vacuum to the adjoining modules 1 via the openings 6. The manifold 11, which is supplied with compressed air through a stub pipe 12, delivers the compressed air to the adjoining modules 1 via the openings 6. Sometimes solutions are used in which the compressed air is delivered to more than one module and then the manifold 11 is longer and covers a few successive modules 1, the same as the vacuum manifold 9.

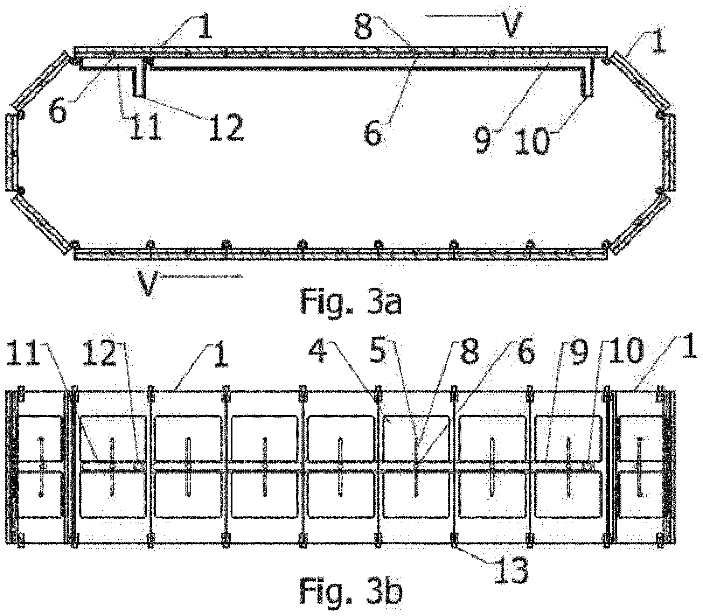

Fig. 3a shows a longitudinal section of the above described state of art modular conveyor. The directions of movement of the upper and lower parts of the conveyor are shown in the drawing. The speed V may be constant so that the conveyor operates continuously. The conveyors operating intermittently are also used. In such case the conveyor is stopped so that various technological operations may be performed in the cavities 4 of the modules in the upper part of the conveyor.

Upon completion of the performed operations the conveyor moves on and stops again after passing a distance equal to the length of one, two or several modules so that next operations are performed. Fig. 3a shows a section of the fixed vacuum manifold 9 with the stub pipe 10 and the fixed compressed air manifold 11 with the stub pipe 12. The moving modules 1 slide over the upper surfaces of the manifolds 9 and 11. Said upper surfaces of the manifolds comprise longitudinal slots located precisely below the openings 6 so that each module 1 sliding over the slots is supplied with vacuum or compressed air. Because of the underpressure in the vacuum manifold 9, it is naturally pressed against the modules 1 making the sliding contact tight. However, the overpressure in the manifold 11 pushes it away from the module 11. Therefore a mechanical pressure is applied in this case by means of springs.

Fig. 3b presents a view from above of a known modular conveyor. The manifolds 9 and 11 with their stub pipes 10 and 12, located under the modules 1 and invisible from above, have been indicated by dashed lines. Similarly, the invisible manifolds 8 located within the modules 1 and the openings 6 located in their bottom part have also been shown in dashed lines. The openings 5 for supplying vacuum or compressed air to the working cavities 4 a visible in this drawing.

Simplicity of the above described state of art solution is an advantage. However, it has several very substantial drawbacks. The sliding connection of the manifolds 9 and 11 with the modules is not completely tight which results in vacuum and compressed air losses and leads to energy losses as well as increase of the noise level at a workplace of a machine. Permanent friction between the modules and the manifolds results in their increased wear.

During the operation of the machine it often happens, that the vacuum or compressed air supply must be switched off and one module must be skipped in one or more runs of the conveyor. This may be caused by a product flaw appearing in a module, requiring to skip subsequent operations in the current run and restart them in a next run when the defective product has been removed. It may also be caused by a damage e.g. a clog in a module.

In such case it would be advantageous to totally cut off the vacuum or compressed air supply of such module so that the machine may continue working with a slightly lower performance until serviced. Unfortunately, the above described state of art solution does not allow for such option because all the modules 1 located at a time over the manifold 9 are supplied with vacuum and all the modules 1 located at a time above the manifold 11 are supplied with compressed air.

It is only possible to completely switch off the vacuum and/or compressed air supply and to stop the machine for the time necessary to remove the defective product or servicing. It is then necessary to restart the machine which, especially in the case of continuously operating modular conveyors, involves a substantial loss of time. It is not possible to cut off the vacuum / compressed air supply to just one or several selected modules

Document US 3 290 858 A discloses a known pin and bush pivot coupling comprising a set of features according to the preamble of independent claim 1.

It was the aim of the invention to provide a modular conveyor comprising a plurality of modules with working cavities, in which the above disadvantages of the state of art conveyors of this type would be eliminated.

In particular, the aim of the invention was to provide a modular conveyor comprising a plurality of modules with working cavities supplied with a pneumatic medium, e.g. vacuum and/or compressed air, in which it would be possible to selectively switch off or switch on the medium supply to the individual cavities.

Another aim of the invention was to provide a modular conveyor comprising a plurality of modules with working cavities, in which the pneumatic couplings of the working cavities with the source of the medium would be tight, reliable and durable.

In connection with the above listed aims, another aim of the invention was to provide a pin and bush pivot coupling for connecting the modules of the above described type in a way that would be pneumatically tight and ensuring failure-free operation for a long time.

According to the invention a pin and bush pivot coupling is provided for connecting a pair of mutually rotatable modules, the first module of the pair having at least one first coupling member consisting of two bushes and the second module of the pair having at least one second coupling member consisting of one bush which is located in the coupling between the bushes of the first module.

The pin and bush pivot coupling according to the invention is characterized in that each coupling member comprises at least one internal channel ending in an outlet opening and enabling flow of a pneumatic medium, the coupling further including a hollow pin extending through both coupling members, the pin being mounted in the coupling immovably with respect to one of the coupling members and rotatably with respect to the other of the coupling members, and wherein the pin-rotatable coupling member comprises a sealed chamber and the pin comprises:
- a first hole thightly communicating with the outlet opening of the internal channel located in the pin-immovable coupling member and
- at least one second hole providing pneumatic communication via the sealed chamber with the outlet opening of the internal channel located in the pin-rotatable coupling member,
so that the pin ensures a thigh pneumatic communication between the internal channels of neighboring modules during their movement.

Preferably, the chamber is sealed with respect to the pneumatic medium by means of sealing means located between the pin and an internal wall of the chamber.

According to the invention a modular conveyor is provided including a plurality of modules comprising internal channels enabling flow of a pneumatic medium, the conveyor having a form of a longitudinal endless chain of the modules rotatably connected to each other and movable around a loop.

The modular conveyor according to the invention is characterized in that the neighboring modules are connected to each other by means of the pivot couplings according to the invention, and wherein one the modules of the conveyor is a main module through which the pneumatic medium is conveyed from an external source to all the modules.

Preferably, all the modules comprise working cavities to which the pneumatic medium is conveyed via the internal channels.

Also preferably, between the modules with the working cavities the conveyor comprises the modules without the working cavities.

The main module is preferably connected to the external source of the pneumatic medium by means of at least one flexible hose, and between the at least one flexible hose and the main module at least one inflow pipe is mounted, one end of the inlet pipe being fixedly connected to the main module and the other end thereof being connected to the flexible hose.

The at least one inflow pipe is preferably rotatably connected to the flexible hose via a manifold that is movable along the conveyor in a reciprocating motion within said loop.

Preferably, the internal channels of the modules, extending along the direction of movement of the conveyor and located on one side of thereof form a first pneumatic artery and the internal channels of the modules, extending along the direction of movement of the conveyor and located on the other side of thereof form a second pneumatic artery.

The first pneumatic artery is preferably connected to the second pneumatic artery through a special channel.

Each module is preferably provided with at least one valve for controlling the inflow of the pneumatic medium to the working cavities of the module.

The pneumatic medium is preferably selected from a group comprising vacuum and compressed air.

Embodiments of the invention are shown in the appended drawings, in which:
Fig. 4a shows an axonometric view from below of a first embodiment of the conveyor according to the invention;
Fig. 4b shows an axonometric view from above of the conveyor shown in fig. 4a;
Fig. 5a shows a side view of the conveyor shown in figs. 4a and 4b;
Fig. 5b shows a top view of the conveyor shown in figs. 4a and 4b with some invisible elements indicated by dashed lines;
Fig. 6a shows a cross-section of a first embodiment of the pivot coupling according to the invention, the cross-section running along a plane parallel to the module and crossing the internal channels;
Fig. 6b shows a cross-section of a second embodiment of the pivot coupling according to the invention, the cross-section running along a plane parallel to the module and crossing the internal channels;
Figs. 7a, 7b and 7c show respectively a side view, a longitudinal cross-section and an axonometric view of the pin used in the pivot coupling according to the invention;
Fig. 8a shows a view as seen from the shorter side of the module of a first type of the conveyor shown in figs. 4-6;
Fig. 8b shows a cross-section taken along a horizontal plane, of the module shown in fig. 8a;
Fig. 8c shows a cross-section taken along a vertical plane parallel to the longer side of the module shown in fig. 8a;
Figs. 8d shows an axonometric view from above of the module shown in fig. 8a;
Fig. 9a shows a view as seen from the shorter side of the module of a second type of the conveyor shown in figs. 4-6;
Fig. 9b shows a cross-section taken along a horizontal plane of the module shown in fig. 9a;
Fig. 9c shows a cross-section taken along a vertical plane parallel to the longer side of the module shown in fig. 9a;
Figs. 9d shows an axonometric view from above of the module shown in fig. 9a;
Fig. 10a shows a view as seen from the shorter side of the main module of the conveyor shown in figs. 4-6;
Fig. 10b shows a cross-section taken along a horizontal plane of the main module shown in fig. 10a;
Fig. 10c shows a cross-section of the main module shown in fig. 10a, taken along a vertical plane parallel to the longer side of the main module, said plane crossing the inflow pipe;
Figs. 10d shows an axonometric view from above of the main module shown in fig. 10a;
Fig. 11a shows a side view as seen from the shorter side of the main module of the conveyor according to second embodiment of the invention;
Fig. 11b shows a cross-section taken along a horizontal plane of the main module shown in fig. 11a;
Fig. 11c shows a cross-section taken along a vertical plane parallel to the longer side of the main module shown in fig. 11a, said plane crossing the inflow pipe;
Figs. 11d shows an axonometric view from above of the main module shown in fig. 11a;
Fig. 12a shows a side view of the conveyor according to second embodiment of the invention;
Fig. 12b shows a top view of the conveyor shown in fig. 12a with some invisible elements indicated by dashed lines;
Fig. 13a shows an axonometric view from below of the conveyor shown in fig. 12a;
Figs. 13b shows an axonometric view from above of the conveyor shown in fig. 12a;
Figs. 14a-14f show side views of the conveyor according to the invention in various positions of the manifold with the inflow pipe;
Fig. 15a shows a side view of a third embodiment of the conveyor according to the invention;
Fig. 15b shows a top view of the conveyor shown in fig. 15a with some invisible elements indicated by dashed lines;
Figs. 16a shows an axonometric view from below of the conveyor shown in fig. 15a;
Figs. 16b shows an axonometric view from above of the conveyor shown in fig. 15a.

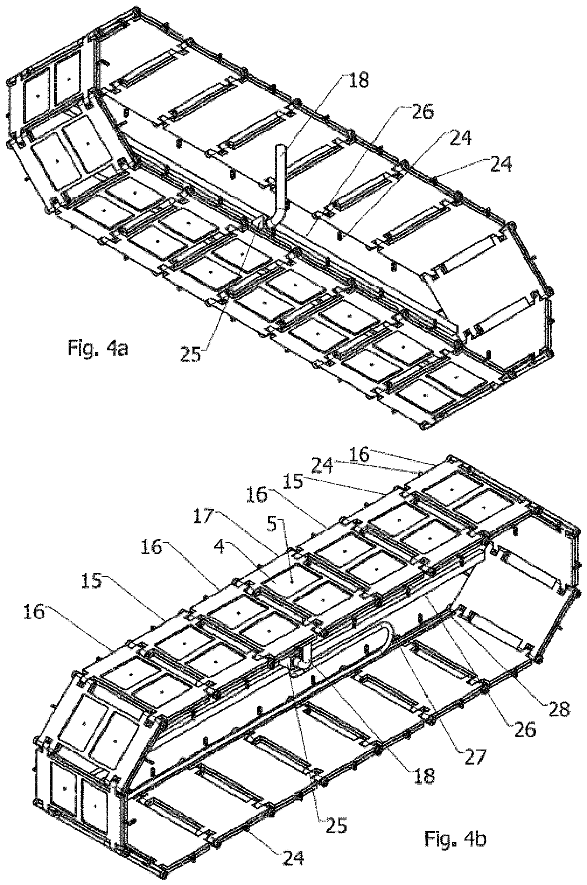

The conveyor according to the invention shown in the figures 4-16 comprises a plurality of modules with working cavities, the modules being connected with each other by means the pivot couplings according to the invention. The modules form an endless chain moving along a loop. The products to be treated e.g. packaged are placed in the working cavities. The packaging process requires that a pneumatic medium, e.g. vacuum and/or compressed air is supplied to the working cavities depending on whether at a defined stage the product should be held and/or thermoformed in the cavity (vacuum) or removed from the cavity (compressed air).

A lower film, preferably a water-soluble film is disposed over the cavities. Then the film is preheated and vacuum is applied into the cavities which results in the thermoforming of the film that adheres to the cavity walls. The vacuum causes shaping of the film and maintains the shape during the whole process. Then the cavities are filled with a product that may be any product, e.g. a washing or laundry powder, gel or liquid, a food product etc. In the next step the second film is disposed, preferably a water-soluble film, over the cavities and both films are sealed together so as to enclose the packaged substance.

Typically, there are many working cavities in one module, each cavity containing one type of a substance-e.g. a powder, gel or liquid. An individual product may be formed of one or more chambers disposed close to each other. There is one common sealing process for the whole module, so in order to separate the individual products the film is cut between them.

In order to remove the products from the working cavities the vacuum must be cut off and preferably compressed air is applied so as to push the products out of the working cavities. Accordingly, each module comprises internal channels enabling to supply vacuum and/or compressed air from an external source. The medium is supplied via at least one flexible hose and at least one inflow pipe in pneumatic communication with one of the modules defined herein as a main module.

Fig. 4a shows an axonometric view from below of a first embodiment of the conveyor according to the invention. The shown conveyor comprises three types of modules - respectively 15, 16, 17, each having two working cavities 4 (the number of the working cavities may vary). The modules 15, 16, 17 are connected with one another by means pivot couplings according to the invention. The structure of the pivot couplings will be explained below. The modules 15 of the first type and 16 of the second type are arranged alternately and they differ only in the structure of their elements forming the mutually complementary pivot couplings.

It is possible to construct conveyors having more than 100 of each of the first 15 and second 16 type of modules. A specific feature of the conveyor according to the invention is that it comprises just one main module 17, by intermediary of which the pneumatic medium is conveyed from the external source. The main module 17 in the embodiment shown in fig. 4a is connected to one inflow pipe 18 suppling the medium. One end of the pipe 18 is fixedly connected to the module 17 and the other end thereof is rotatably connected with a manifold 25. During the operation of the conveyor, the manifold 25 is moving in a reciprocating motion along guides 26 located within the loop along which the conveyor is moving. In fig. 4a also valves 24 are shown, the function of which will be described in the following.

In fig. 4b a flexible hose 27 and a guide 28 for the flexible hose 27 may be seen. The flexible hose 27 connects the inflow pipe 18 with the external source of the medium (not shown).

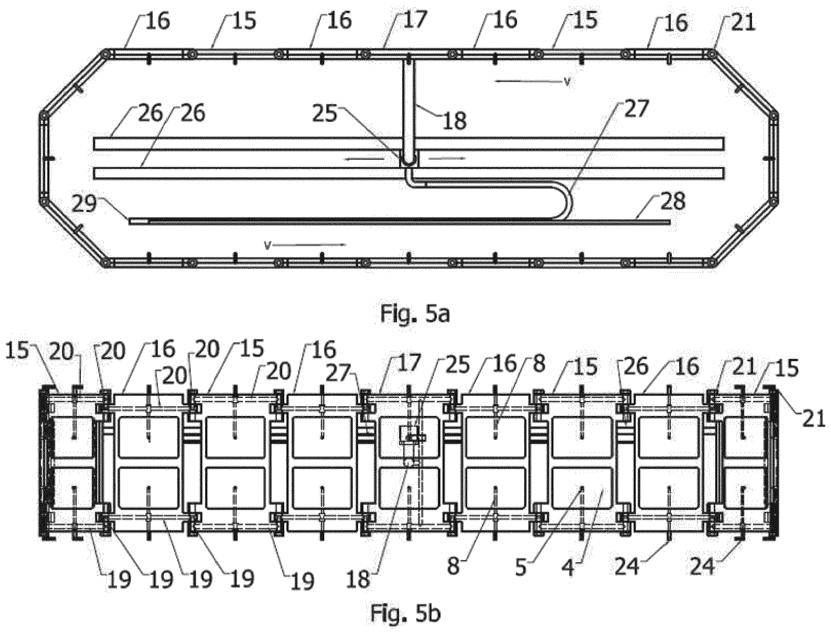

Fig. 5a shows a side view of the conveyor shown in figs. 4a and 4b. Apart from the elements shown in the preceding figures, in this figure the end 29 of the flexible hose 27 is visible, for the delivering the pneumatic medium (vacuum or compressed air).

Fig. 5b shows a top view of the conveyor shown in figs. 4a and 4b with some invisible elements indicated by dashed lines. Apart from the elements shown in the above described figures, in this figure internal channels of the modules and valves 24 are shown. The internal channels include transversal channels 8 and longitudinal channels 19 and 20. The longitudinal channels 19 are arranged along the sides of the modules and along the direction of movement of the conveyor; they are pneumatically connected with each other by means of the pivot couplings according to the invention so as to form a medium delivery artery extending along the whole conveyor on one side thereof. The longitudinal channels 20 are arranged analogically so as to form a medium delivery artery extending along the whole conveyor on the other side thereof. The transversal channels 8 pneumatically connect the longitudinal channels 19 and 20 with corresponding working cavities 4 through openings 5 and via the valves 24 enabling to selectively close and open the inflow of the medium to the individual working cavities 4.

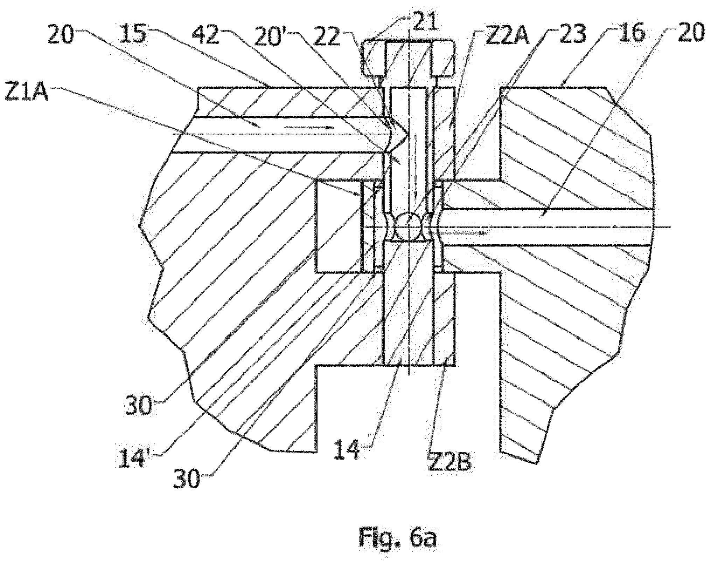

Fig. 6a shows a cross-section of a first embodiment of the pivot coupling according to the invention, the cross-section running along a plane parallel to the module and crossing the internal channels. The pivot coupling according to the invention is a pin and bush coupling designed for connecting a pair of mutually rotatable modules, in particular the modules 15, 16 and 17 of the conveyor according to the invention. In fig. 6a the module 15 is the module of the first type provided with a first coupling member Z2 consisting of two bushes Z2_{A} and Z2_{B}. The module 16 is the module of the second type having a second coupling member Z1 consisting of one bush Z1_{A}. A hollow pin 14 extends through the bushes Z2_{A}, Z2_{B} and Z1_{A}, the pin 14 and the bushes Z2_{A}, Z2_{B} and Z1_{A} forming the pivot coupling of the pair of modules.

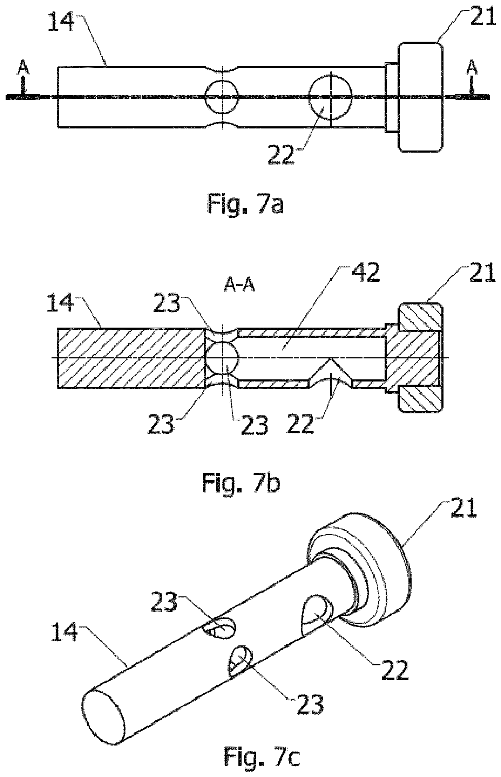

In figs. 7a-7c the hollow pin 14 is shown. As may be seen, the pin has an axial channel 42 and a first hole 22 as well as at least one second hole 23. In this embodiment the pin 14 has four holes 23.

The pin 14, when mounted in the coupling according to the invention, is immovably connected with respect to one of the coupling members Z1, Z2, and rotatably connected with respect to the other of the coupling members Z1, Z2. Such connections may be realized in any suitable way known in the art. In the embodiment shown in fig. 6a, the pin 14 is fixed with respect to the first type module 15 and rotatable with respect to the second type module 16. Hence, in this case the coupling member Z1 is called a pin-rotatable coupling member Z1, and the coupling member Z2 is called a pin-immovable coupling member Z2. In order to ensure a tight pneumatic connection of the channels 20 belonging to both interconnected modules, the hole 22 of the pin 14 (located closer to the head of the pin 14) is in constant tight pneumatic communication with the internal channel 20 of the module 15. On the other hand, the holes 23 (located closer to the center of the pin 14) ensure, by intermediary of a chamber 14', a pneumatic connection of the channel 20 belonging to the module 16 during its rotation relative to the module 15. The bush Z1_{A} preferably has sealing means, preferably sealing rings 30 mounted in the area of the rotary contact of the pin 14 with the wall of the chamber 14'. The sealing rings 30 prevent any losses of the vacuum or compressed air flowing through the internal channels and the coupling. The pin 14 of the conveyor according to the invention may preferably have a roller 21 mounted on its top, enabling to roll the conveyor modules around the loop.

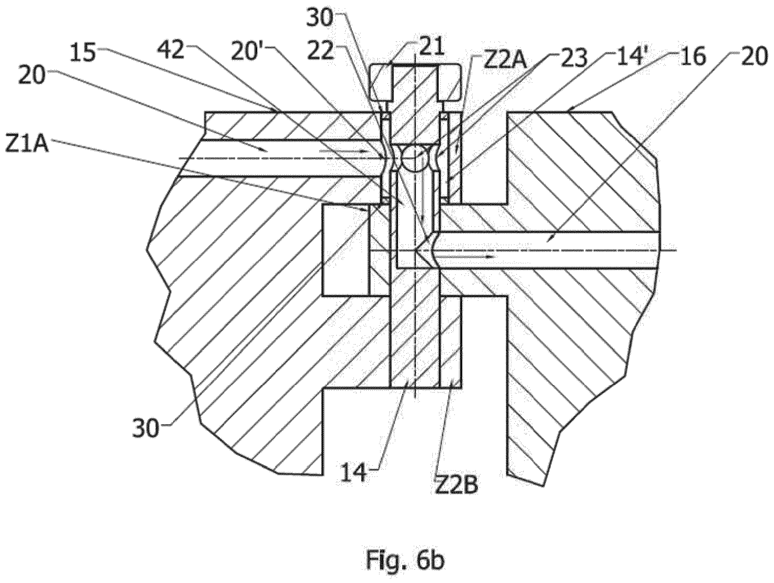

In an alternative embodiment of the coupling according to the invention, shown in fig. 6b, the pin 14 is rotatable with respect to the first type module 15 and fixed with respect to the second type module 16. Consequently, the chamber 14' is located in the bush Z2_{A} and the pin 14 has its holes reversely arranged - the hole 22 is located closer to the center of the pin 14, and the holes 23 are located closer to the head of the pin 14. The other elements of the coupling are analogical to those of the first embodiment.

Hence, the coupling according to the invention provides a pivot connection of the modules rotating with respect to each other and ensures a tight flow from one module to another of the pneumatic medium circulating in the internal channels of the modules. Due to the couplings according to the invention the medium may be conveyed from an external source to just one module of the conveyor (the main module) which simplifies the structure of the conveyor while providing vast possibilities of controlling the supply of the medium to the individual modules.

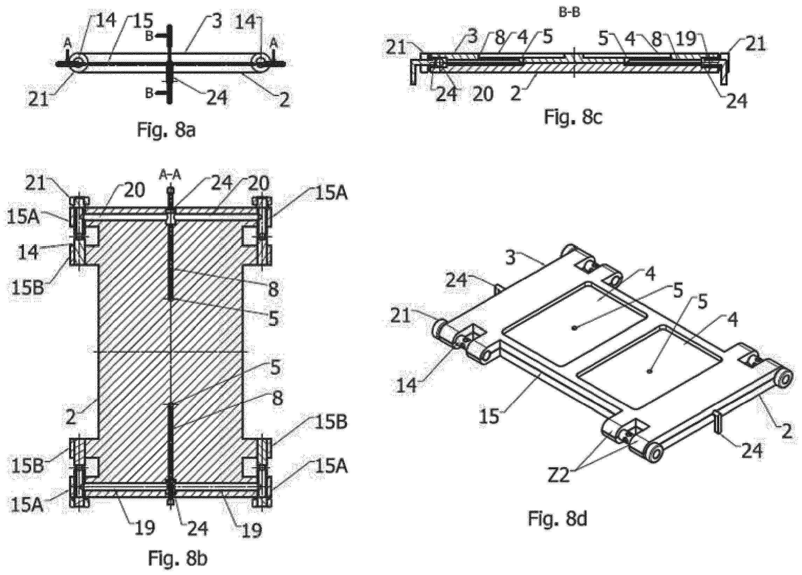

Figs. 8a-8d present the first type module of the conveyor of figs. 4-7, i.e. the module 15. The module 15 has four first coupling members, one at each corner. Specifically, in fig. 8b the internal channels 19 and 20 located on both sides of the modules are shown. The channels 19 and 20 extend as far as bushes 15A (designated Z2A in figs. 6a, 6b) and communicate with the holes 22 of the pins 14. The transversal channels 8 communicate with the channels 19 and 20 for supplying the medium from the channels 19 and 20 to the working cavities 4 through the openings 5. The valves 24 for controlling the inflow of the medium to the individual working cavities are mounted at the connections of the channels 19, 20 and 8. Fig. 8d shows the working cavities 4 with the openings 5 located on the upper side of the module.

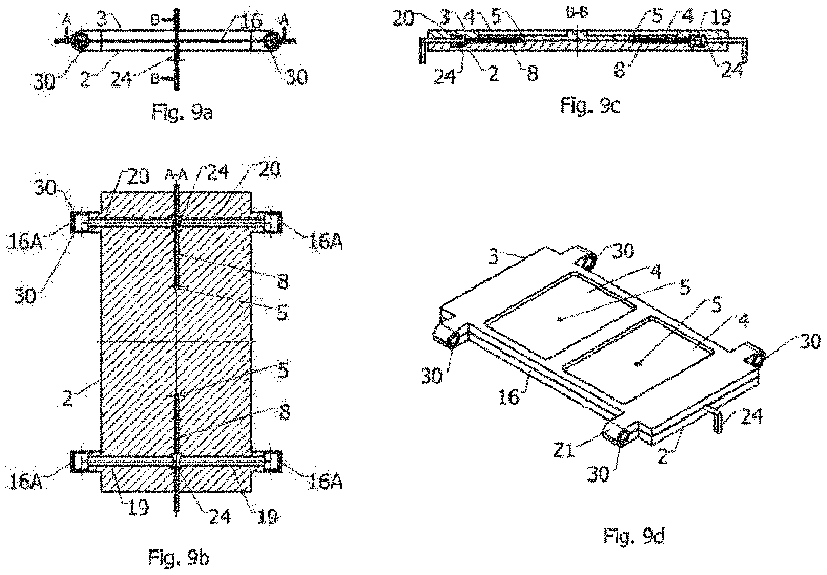

Figs. 9a-9d show the second type module of the conveyor of figs. 4-7, i.e. the module 16. Figs. 9a-9d are analogical to figs. 8a-8d. As shown in fig. 9b, in the second type module 16 the channels 19 and 20 extend as far as the bushes 16A (designated Z1A in figs. 6a, 6b). When the pins 14 are mounted in the bushes 15A, 15B and 16A, the channels 19 and 20 of the module 16 communicate with its holes 23 during rotation of the module 16.

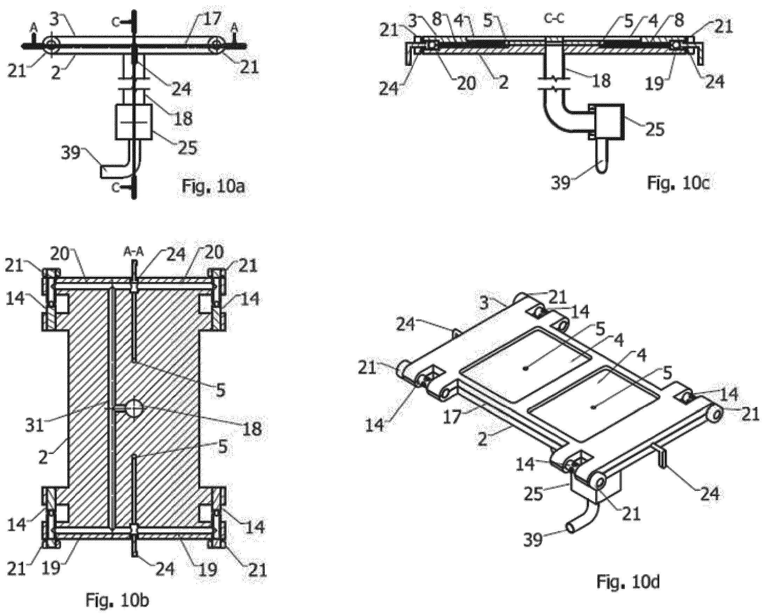

In figs. 10a-10d analogical views of the main module 17 are shown. In this embodiment the main module 17 pneumatically communicates in a fixed way with one inflow pipe 18, supplying the medium (vacuum or compressed air) to the internal channels of the main module, in particular to the channel 31 communicating with the longitudinal channels 19 and 20. As shown in figs. 10a, 10c and 10d, the inflow pipe 18 communicates by its other end with the manifold 25, communicating in turn, via a stub pipe 39, with the flexible hose 27 (shown in figs. 4b, 5a and 5b). The connection of the other end of the inflow pipe 18 with the manifold 25 is rotatable. The operation of the manifold 25 and its cooperation with the inflow pipe 18 will be explained below.

The main module 17 may be realized as shown in figs. 10b and 10d, analogically to the first type module with the bushes 15A, 15B or analogically to the second type module having one coupling element with one bush 16A.

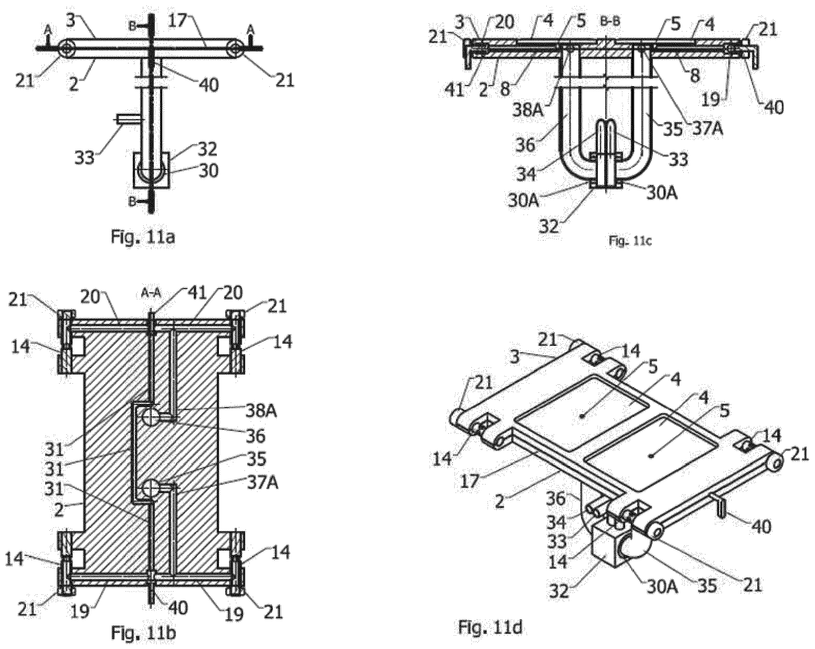

Figs. 11a-11d show, similarly to the above described figures, the cross-sections and views of the main module of the conveyor according to the second embodiment of the invention. In the second embodiment the main module is pneumatically connected in a fixed way with two inflow pipes 35 and 36 supplying the medium (vacuum or compressed air) to the respective internal channels 37A and 38A communicating with the longitudinal channels 19 and 20. As shown in figs. 11a, 11c and 11d, the pipes 35 and 36 are connected by their other ends with a double manifold 32. The movable, here rotatable connections of the pipes 35 and 36 with the manifold 32 are preferably provided with sealing means 30A preventing loss of the medium. As shown in fig. 11b, in this embodiment the internal channels 19 and 20 are connected by a transversal channel 31 provided with valves 40 and 41, enabling the arteries formed by the channels 19 and 20 of the specific modules to be selectively connected or disconnected with each other. Besides the above described elements, figs. 11c and 11d show stub pipes 33 and 34 to which two independent resilient hoses are connected.

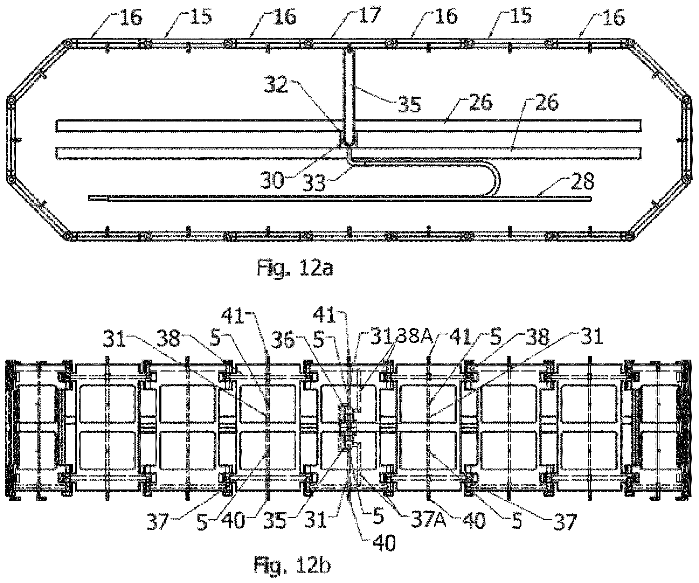

Figs. 12a and 12b show respectively a side view and a top view of the conveyor according to the second embodiment of the invention shown in figs. 11a -11d. Some invisible elements of the conveyor are indicated by dashed lines.

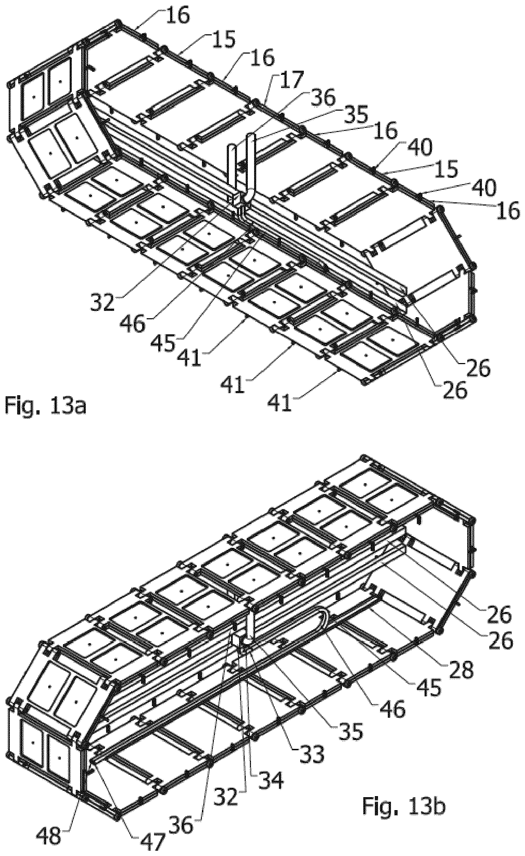

Figs. 13a and 13b present the same embodiment in axonometric views from below and from above. In particular, in fig. 13b two resilient hoses 45 and 46 may be seen, the resilient hoses 45 and 46 being led in a guide 28, the vacuum or compressed air being conveyed from the external source through their ends 47 and 48.

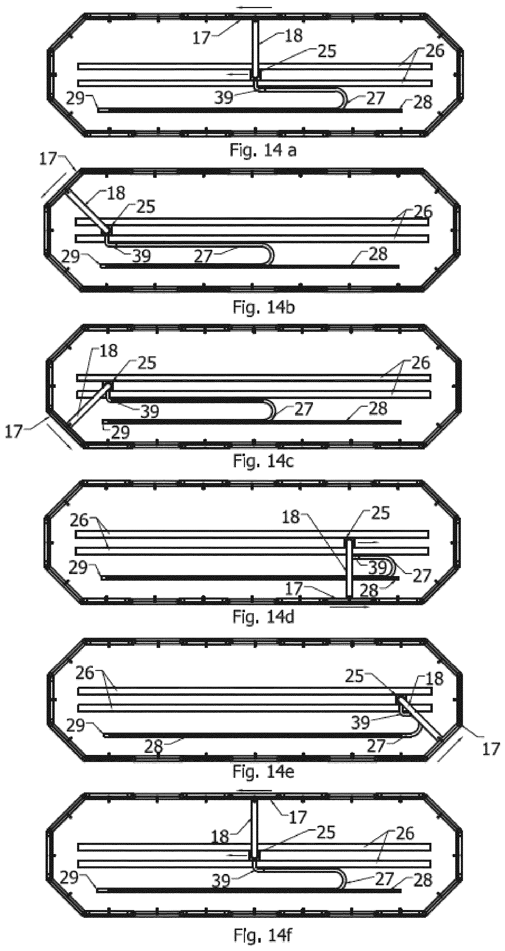

Figs. 14a-14f present side views of the conveyor according to the first embodiment of the invention in diverse positions to the manifold 25 and the main module 17, as the conveyor moves along its way around the loop. The operation of the conveyor according to the invention will be described with reference to these figures.

Vacuum and/or compressed air is supplied to the main module 17 through the manifold 25 (or the double manifold 32 in the case of the second embodiment). The manifold 25 is rotatably connected with one central inflow pipe 18 supplying vacuum or compressed air through the stub pipe 39 and the flexible hose 27 (figs. 10c and 10d). In the second embodiment, the main module 17 may be supplied with two different media through the movable double manifold 32, the stub pipes 33, 34 and the two independent flexible hoses 45, 46 (figs. 11d and 13b).

As may be seen in figs. 14a-14f, the main module 17 moves to the left being followed by the manifold 25 as far as to the position shown in fig. 14b. In this position the manifold 25 remains temporarily stationary and the main module 17 together with the associated pipe 18 makes a turn of 180°. Fig. 14c shows an intermediate position during the turning of the module 17. Once the turn is completed the main module 17 is oriented with its working cavities 4 facing down and it starts to move back to the right, together with its pipe 18 and the manifold 25. Fig. 11d shows the module 17 moving on.

Another turning position is shown in fig. 14e. The manifold 25 stops again and the main module 17 together with the pipe 18 makes another turn of 180°, until the main module 17 is oriented with its working cavities 4 facing up. Then the module 17 with the pipe 18 and the manifold 25 starts again and moves to the left along the upper part of the loop. As shown, the manifold 25 cyclically moves in a reciprocating motion from the position shown in fig. 14b to the position shown in fig. 14e and backwards again. The manifold 25 moves between the two guides 26 constraining its rotation. The above described way of movement of the main module 17 and the manifold 25 is identical in the case of the double manifold 32 and the main module 17 with two inflow pipes, one of which may supply e.g. vacuum 35 and the other compressed air 36.

The end of the flexible hose 27 moves in a reciprocating motion with the manifold 25 it is connected to. The other end of the flexible hose 27 remains stationary and constitutes an external source medium supply point for the modular conveyor. During the reciprocating movement of the manifold 25 the flexible hose is cyclically wound and unwound, as shown in fig. 14a-14f. The moving flexible hose 27 is supported by the guide 28. As shown in figs. 11a-11d, in a conveyor supplied simultaneously with vacuum and compressed air, the double manifold 32 is supplied with vacuum through the stub pipe 33 and compressed air is supplied through the stub pipe 34. As shown in figs. 12a, 12b, 13a and 13b the double manifold 32 moves between the identical guides 25 constraining its rotation, the same as the single manifold 25, and moves in an identical reciprocating motion from one end of the modular conveyor to the other end thereof. The two flexible hoses 45, 46 of the pipe, the same as the above described flexible hose 27, have fixed ends 47, 48 (fig. 13b) for supplying vacuum and compressed air from an external source. During the cyclical reciprocating movement of the double manifold 32, the flexible hoses 33 and 34 are cyclically wound and unwound as the flexible hose 27.

Hence, due to the fact that the modules of the conveyor are connected by means of the pivot couplings according to the invention, it is possible for the conveyor according to the invention to comprise just one module connected with an external source of the pneumatic medium. On the other hand, the advantageous solution consisting in a rotatable connection of the inflow pipe with the manifold movable in a reciprocating motion, enables to construct a conveyor in which the medium is supplied through a system comprising few elements movable in a simple way.

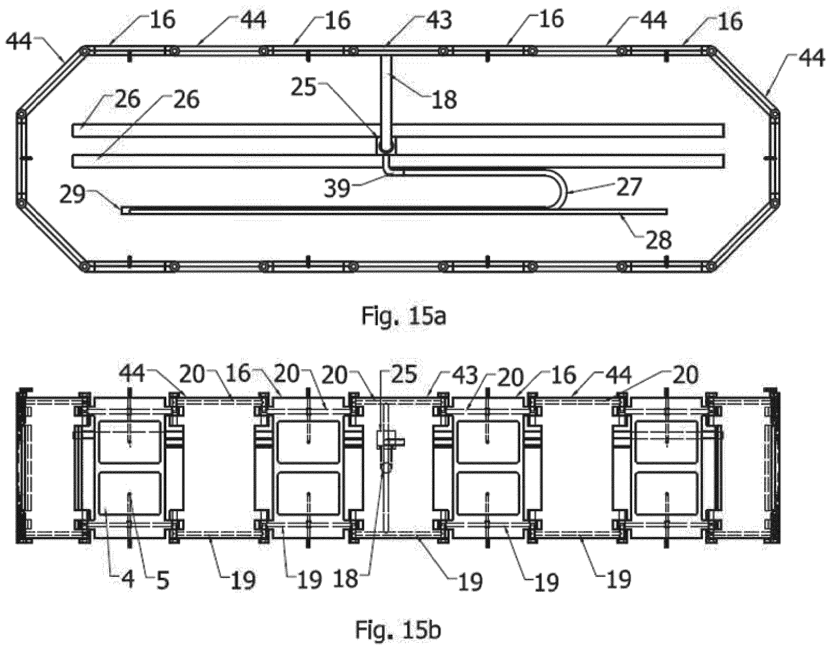

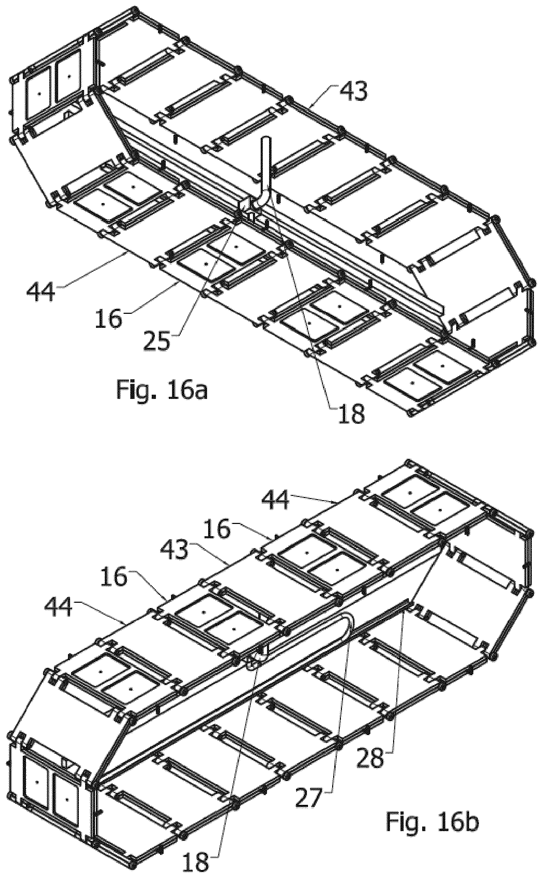

In figs. 15a and 15b, as well as 16a and 16b, a third embodiment of the conveyor according to the invention is shown. Such a conveyor may be used in an intermittent mode of operation. It often happens that the length of a working station performing a technological operation in single module is longer than one module. In such case it is convenient that a single translation of the conveyor from one stoppage position to another is longer than the length of one module and is equal instead to a multiple of two module lengths. Other solutions are also possible in which it is equal to a multiple of more than two module lengths. If the length of a single translation of the modular conveyor is equal to two module lengths, only every other module of the conveyor is preferably equipped with the working cavities 4, as shown in figs. 15b, 16a and 16b.

The modules 44 shown in figs. 15a, 15b, 16a and 16b do not have the working cavities 4 and the valves which are not necessary in this case. They only have the channels 19, 20 of the left and right arteries. The modules 44 practically constitute just interfaces between the above described modules 16 comprising the working cavities. In the embodiment shown in figs. 15a, 15b, 16a and 16b the modules 44 and the main module 43 do not have the working cavities 4. Alternatively, the modules 15 may have the working cavities and the valves, while the modules 16 are deprived of them. The main module 43 has one central inflow pipe supplying vacuum or compressed air, but optionally it may also have two independent pipes for vacuum and compressed air.

As may be seen in figs. 8-10, each of the modules 15, 16, 17 may be equipped with the valves 24. By opening the valves 24 the vacuum or compressed air may be conveyed from the artery 19 or 20, through the channels 8, to the working cavities 4. On the other hand, by closing the valves 24 the supply of the medium to the working cavities 4 may be cut off. Two valves 24 are installed in each module comprising the working cavities 4; one for the artery 19 and the other for the artery 20. According to the invention, each artery extending through any individual module may also comprise more than one valve, and each valve may control the medium supply in more than one working cavity of any individual module. Also, the module conveyors according to the invention may have just one artery 19 or 20.

Provision of two parallel arteries 19 and 20 is advantageous in the case of the conveyors having a larger width and a greater number of working cavities in one module. In such cases two arteries enable to obtain a uniform vacuum or compressed air level in a shorter time after turning on. With the two parallel arteries 19 and 20 it is also possible to install two independent inflow pipes 35 and 36 in the main module 17; in such case each artery supplies a different medium (vacuum or compressed air). As shown in fig. 12b, there are two arteries 37 and 38 which may be independently supplied with vacuum and compressed air. Each of the arteries 37, 38 is equipped with its own valve, respectively a valve 40 and a valve 41.

The vacuum valve 40, when open, connects the vacuum artery 37 through the channel 31 with all the openings 5 of the working cavities 4. At the same time the compressed air valve 41 must be closed. Upon closure of the vacuum valve 40, the compressed air valve 41 may be opened so as to connect the compressed air artery 38 through the channel 31 with all the openings 5 of the working cavities 4.

As mentioned above, when the modular conveyor according to the invention is simultaneously supplied with vacuum and compressed air, each and any individual module may have more than one vacuum valve, more than one compressed air valve and more than two working cavities. Each valve of any individual module may have an independent manifold supplying the required medium to one working cavity 4, to some of the working cavities 4 or to all of them.

The inventive solution allows for a great flexibility in the way of supplying the modules with the media. With a large number of the working cavities 4 in one module, it is possible to cut off vacuum and compressed air in all the working cavities at the same moment. It is also possible to turn on vacuum in all the working cavities; optionally, it is possible to turn on compressed air in all the working cavities, or to turn on vacuum in some of the working cavities 4 while in the others compressed air may be turned on. Finally, it is possible to turn on vacuum in group of the working cavities 4, turn on compressed air in another group of them and cut off medium in the remaining working cavities 4.

The conveyor according to the invention allows to realize complex technological processes that may be applied in many kinds of industries.

## Claims

1. A pin and bush pivot coupling for connecting a pair of mutually rotatable modules (15-16; 15-17; 16-17; 16-44; 16-43), the first module of the pair having at least one first coupling member (Z2) consisting of two bushes and the second module of the pair having at least one second coupling member (Z1) consisting of one bush which is located in the coupling between the bushes of the first module, **characterized in that** each coupling member (Z1, Z2) comprises at least one internal channel (19, 20) ending in an outlet opening (19', 20') and enabling flow of a pneumatic medium, the coupling further including a hollow pin (14) extending through both coupling members (Z1, Z2), the pin (14) being mounted in the coupling immovably with respectto one of the coupling members (Z1, Z2) and rotatably with respect to the other of the coupling members (Z1, Z2), and
wherein
the pin-rotatable coupling member (Z1, Z2) comprises a sealed chamber (14') and the pin (14) comprises:
- a first hole (22) thightly communicating with the outlet opening of the internal channel (19, 20) located in the pin-immovable coupling member (Z1, Z2) and
- at least one second hole (23) providing pneumatic communication via the sealed chamber (14') with the outlet opening of the internal channel (19, 20) located in the pin-rotatable coupling member (Z1, Z2),
so that the pin (14) ensures a thigh pneumatic communication between the internal channels (19, 20) of neighboring modules (15, 16, 17, 43, 44) during their movement.

2. The pin and bush pivot coupling according to claim 1, **characterized in that** the chamber (14') is sealed with respect to the pneumatic medium by means of sealing means (30) located between the pin (14) and an internal wall of the chamber (14').

3. A modular conveyor including a plurality of modules (15, 16, 17; 16, 43, 44) comprising internal channels (8, 19, 20, 31) enabling flow of a pneumatic medium, the conveyor having a form of a longitudinal endless chain of the modules rotatably connected to each other and movable around a loop, **characterized in that** the neighboring modules (15, 16, 17, 43, 44) are connected to each other by means of the pivot couplings according to claims 1 or 2, and wherein one the modules of the conveyor is a main module (17, 43) through which the pneumatic medium is conveyed from an external source to all the other modules (15, 16, 44).

4. The modular conveyor according to claim 3, **characterized in that** all the modules (15, 16, 17) comprise working cavities (4) to which the pneumatic medium is conveyed via the internal channels (8, 19, 20, 31).

5. The modular conveyor according to claim 3, **characterized in that** between the modules (15, 16, 17) with the working cavities (4) the conveyor comprises the modules (43, 44) without the working cavities (4).

6. The modular conveyor according to any of claims 3-5, **characterized in that** the main module (17, 43) is connected to the external source of the pneumatic medium by means of at least one flexible hose (27), and **in that** between the at least one flexible hose (27) and the main module (17, 43) at least one inflow pipe (18, 35, 36) is mounted, one end of the inlet pipe (18, 35, 36) being fixedly connected to the main module (17, 43) and the other end thereof being connected to the flexible hose (27).

7. The modular conveyor according to claim 6, **characterized in that** the at least one inflow pipe (18, 35, 36) is rotatably connected to the flexible hose (27) via a manifold (25, 32) movable along the conveyor in a reciprocating motion within said loop.

8. The modular conveyor according to any of claims 3-5, **characterized in that** the internal channels (19) of the modules (15, 16, 17, 43, 44), extending along the direction of movement of the conveyor and located on one side of thereof form a first pneumatic artery and the internal channels (20) of the modules (15, 16, 17, 43, 44), extending along the direction of movement of the conveyor and located on the other side of thereof form a second pneumatic artery.

9. The modular conveyor according to claim 8, **characterized in that** the first pneumatic artery is connected to the second pneumatic artery through a special channel (31).

10. The modular conveyor according to any of claims 3-5, **characterized in that** each module (15, 16, 17) is provided with at least one valve (24, 40, 42) for controlling the inflow of the pneumatic medium to the working cavities (4) of the module.

11. The modular conveyor according to any of claims 3-5, **characterized in that** the pneumatic medium is selected from a group comprising vacuum and compressed air.

## Patentansprüche

1. Stift- und Buchsenschwenkkupplung zum Verbinden eines Paares von gegenseitig drehbaren Modulen (15-16; 15-17; 16-17; 16-44; 16-43), wobei das erste Modul des Paares mindestens ein erstes Kupplungselement (Z2) aufweist, das aus zwei Buchsen besteht, und das zweite Modul des Paares mindestens ein zweites Kupplungselement (Z1) aufweist, das aus einer Buchse besteht, die in der Kupplung zwischen den Buchsen des ersten Moduls angeordnet ist, **dadurch gekennzeichnet, dass** jedes Kupplungselement (Z1, Z2) mindestens einen inneren Kanal (19, 20) aufweist, der in einer Auslassöffnung (19', 20') endet und den Durchfluss eines pneumatischen Mediums ermöglicht, wobei die Kupplung ferner einen hohlen Stift (14) aufweist, der sich durch beide Kupplungselemente (Z1, Z2) erstreckt, wobei der Stift (14) in der Kupplung unbeweglich in Bezug auf eines der Kupplungselemente (Z1, Z2) und drehbar in Bezug auf das andere der Kupplungselemente (Z1, Z2) angebracht ist, und
wobei
das mit dem Stift drehbare Kupplungselement (Z1, Z2) eine abgedichtete Kammer (14') umfasst und der Stift (14) umfasst:
- ein erstes Loch (22), das dicht mit der Auslassöffnung des inneren Kanals (19, 20) in Verbindung steht, der sich in dem stiftlosen Kupplungselement (Z1, Z2) befindet, und
- mindestens ein zweites Loch (23), das eine pneumatische Verbindung über die abgedichtete Kammer (14') mit der Auslassöffnung des inneren Kanals (19, 20) herstellt, der sich in dem stiftdrehbaren Kupplungselement (Z1, Z2) befindet,
so dass der Stift (14) eine schenkelartige pneumatische Verbindung zwischen den inneren Kanälen (19, 20) benachbarter Module (15, 16, 17, 43, 44) während ihrer Bewegung sicherstellt.

2. Stift- und Buchsenschwenkkupplung nach Anspruch 1, **dadurch gekennzeichnet, dass** die Kammer (14') gegenüber dem pneumatischen Medium mittels einer Dichtungseinrichtung (30) abgedichtet ist, die zwischen dem Stift (14) und einer Innenwand der Kammer (14') angeordnet ist.

3. Ein modularer Förderer, der eine Vielzahl von Modulen (15, 16, 17; 16, 43, 44) mit inneren Kanälen (8, 19, 20, 31), die den Durchfluss eines pneumatischen Mediums ermöglichen, wobei der Förderer die Form einer längsgerichteten endlosen Kette der Module aufweist, die drehbar miteinander verbunden und um eine Schleife bewegbar sind, **dadurch gekennzeichnet, dass** die benachbarten Module (15, 16, 17, 43, 44) mittels der Schwenkkupplungen nach Anspruch 1 oder 2 miteinander verbunden sind, und wobei eines der Module des Förderers ein Hauptmodul (17, 43) ist, durch das das pneumatische Medium von einer externen Quelle zu allen anderen Modulen (15, 16, 44) befördert wird.

4. Modularer Förderer nach Anspruch 3, **dadurch gekennzeichnet, dass** alle Module (15, 16, 17) Arbeitskavitäten (4) aufweisen, zu denen das pneumatische Medium über die internen Kanäle (8, 19, 20, 31) gefördert wird.

5. Modularer Förderer nach Anspruch 3, **dadurch gekennzeichnet, dass** der Förderer zwischen den Modulen (15, 16, 17) mit den Arbeitskavitäten (4) die Module (43, 44) ohne die Arbeitskavitäten (4) umfasst.

6. Modularer Förderer nach einem der Ansprüche 3 bis 5, **dadurch gekennzeichnet, dass** das Hauptmodul (17, 43) mit der externen Quelle des pneumatischen Mediums mittels mindestens eines flexiblen Schlauchs (27) verbunden ist, und dass zwischen dem mindestens einen flexiblen Schlauch (27) und dem Hauptmodul (17, 43) mindestens ein Einlassrohr (18, 35, 36) angebracht ist, wobei ein Ende des Einlassrohrs (18, 35, 36) fest mit dem Hauptmodul (17, 43) verbunden ist und das andere Ende davon mit dem flexiblen Schlauch (27) verbunden ist.

7. Modularer Förderer nach Anspruch 6, **dadurch gekennzeichnet, dass** mindestens ein Einlassrohr (18, 35, 36) über einen Verteiler (25, 32), der entlang des Förderers in einer hin- und hergehenden Bewegung innerhalb der Schleife bewegbar ist, drehbar mit dem flexiblen Schlauch (27) verbunden ist.

8. Modularer Förderer nach einem der Ansprüche 3 bis 5, **dadurch gekennzeichnet, dass** die inneren Kanäle (19) der Module (15, 16, 17, 43, 44), die sich entlang der Bewegungsrichtung des Förderers erstrecken und auf einer Seite davon angeordnet sind, eine erste pneumatische Arterie bilden und die inneren Kanäle (20) der Module (15, 16, 17, 43, 44), die sich entlang der Bewegungsrichtung des Förderers erstrecken und auf der anderen Seite davon angeordnet sind, eine zweite pneumatische Arterie bilden.

9. Modularer Förderer nach Anspruch 8, **dadurch gekennzeichnet, dass** die erste pneumatische Arterie mit der zweiten pneumatischen Arterie durch einen speziellen Kanal (31) verbunden ist.

10. Modularer Förderer nach einem der Ansprüche 3 bis 5, **dadurch gekennzeichnet, dass** jedes Modul (15, 16, 17) mit mindestens einem Ventil (24, 40, 42) zur Steuerung des Zuflusses des pneumatischen Mediums zu den Arbeitskavitäten (4) des Moduls versehen ist.

11. Modularer Förderer nach einem der Ansprüche 3-5, **dadurch gekennzeichnet, dass** das pneumatische Medium aus einer Gruppe ausgewählt ist, die Vakuum und Druckluft umfasst.

## Revendications

1. Un couplage de pivot de broche et de barre pour connecter une paire de modules mutuellement rotatifs (15-16 ; 15-17 ; 16-17 ; 16-44 ; 16-43), le premier module de la paire ayant au moins un premier élément de couplage (Z2) constitué de deux barres et le second module de la paire ayant au moins un second élément de couplage (Z1) constitué d'une barre qui est située dans le couplage entre les barres du premier module, **caractérisé en ce que** chaque élément de couplage (Z1, Z2) comprend au moins un canal interne (19, 20) se terminant par une ouverture de sortie (19', 20') et permettant l'écoulement d'un milieu pneumatique, le couplage comprenant en outre une broche creuse (14) s'étendant à travers les deux éléments de couplage (Z1, Z2), la broche (14) étant montée dans le couplage de manière immobile par rapport à l'un des éléments de couplage (Z1, Z2) et rotative par rapport à l'autre des éléments de couplage (Z1 ,Z2) et
dans lequel
l'élément de couplage rotatif à broche (Z1, Z2) comprend une chambre étanche (14') et la broche (14) comprend :
- un premier trou (22) communiquant étanchement avec l'ouverture de sortie du canal interne (19, 20) situé dans l'élément de couplage immobile à broche (Z1, Z2) et
- au moins un deuxième trou (23) assurant une communication pneumatique via la chambre étanche (14 ') avec l'ouverture de sortie du canal interne (19, 20) situé dans l'élément de couplage rotatif à broche (Z1, Z2),
de sorte que la broche (14) assure une communication pneumatique étanche entre les canaux internes (19, 20) des modules voisins (15, 16, 17, 43, 44) lors de leur mouvement.

2. Le couplage de pivot de broche et de barre selon la revendication 1, **caractérisé en ce que** la chambre (14') est étanche par rapport au milieu pneumatique au moyen de moyens d'étanchéité (30) situés entre la broche (14) et une paroi interne de la chambre (14').

3. Un convoyeur modulaire comprenant une pluralité de modules (15, 16, 17 ; 16, 43, 44) comprenant des canaux internes (8, 19, 20, 31) permettant l'écoulement d'un milieu pneumatique, le convoyeur ayant la forme d'une chaîne longitudinale sans fin des modules reliés de manière rotative les uns aux autres et mobiles autour d'une boucle, **caractérisé en ce que** les modules voisins (15, 16, 17, 43, 44) sont reliés les uns aux autres au moyen des couplages de pivot selon les revendications 1 ou 2, et dans lequel l'un des modules du convoyeur est un module principal (17, 43) à travers lequel le milieu pneumatique est transporté d'une source externe vers tous les autres modules (15, 16, 44).

4. Le convoyeur modulaire selon la revendication 3, **caractérisé en ce que** tous les modules (15, 16, 17) comprennent des cavités fonctionnelles (4) vers lesquelles le milieu pneumatique est transporté via les canaux internes (8, 19, 20, 31).

5. Le convoyeur modulaire selon la revendication 3, **caractérisé en ce qu'**entre les modules (15, 16, 17) avec les cavités fonctionnelles (4) le convoyeur comprend les modules (43, 44) sans les cavités fonctionnelles (4).

6. Le convoyeur modulaire selon l'une quelconque des revendications 3 à 5, **caractérisé en ce que** le module principal (17, 43) est relié à la source externe du milieu pneumatique au moyen d'au moins un tuyau flexible (27), et **en ce qu'**entre l'au moins un tuyau flexible (27) et le module principal (17, 43) au moins une conduite d'afflux (18, 35, 36) est montée, une extrémité de la conduite d'entrée (18, 35, 36) étant reliée de manière fixe au module principal (17, 43) et son autre extrémité étant connecté au tuyau flexible (27).

7. Le convoyeur modulaire selon la revendication 6, **caractérisé en ce que** l'au moins une conduite d'afflux (18, 35, 36) est reliée de manière rotative au tuyau flexible (27) via un collecteur (25, 32) mobile le long du convoyeur dans un mouvement de va-et-vient dans ladite boucle.

8. Le convoyeur modulaire selon l'une quelconque des revendications 3 à 5, **caractérisé en ce que** les canaux internes (19) des modules (15, 16, 17, 43, 44), s'étendant le long de la direction de mouvement du convoyeur et situés sur un côté de celui-ci, forment une première artère pneumatique et les canaux internes (20) des modules (15, 16, 17, 43, 44), s'étendant le long de la direction de mouvement du convoyeur et situés de l'autre côté de celui-ci, forment une seconde artère pneumatique.

9. Le convoyeur modulaire selon la revendication 8, **caractérisé en ce que** la première artère pneumatique est reliée à la seconde artère pneumatique par un canal spécial (31).

10. Le convoyeur modulaire selon l'une quelconque des revendications 3 à 5, **caractérisé en ce que** chaque module (15, 16, 17) est pourvu d'au moins une soupape (24, 40, 42) pour contrôler l'afflux du milieu pneumatique vers les cavités fonctionnelles (4) du module.

11. Le convoyeur modulaire selon l'une quelconque des revendications 3 à 5, **caractérisé en ce que** le milieu pneumatique est choisi dans un groupe comprenant le vide et l'air comprimé.
